# FASCICULE DE BREVET EUROPEEN

(11) **EP 1 978 055 B1**
(45) Date de publication et mention de la délivrance du brevet: **28.03.2018**
(21) Numéro de dépôt: 08154099.9
(22) Date de dépôt: 04.04.2008
(51) Int. Cl.: C08K 9/04, C08K 9/06, C09C 1/02, C09C 3/08, C09C 3/10, C09C 3/12, C09D 5/08, C23C 18/12, C23C 22/56, B82B 1/00

(54) **Matériau nanostructuré particulier, comme revêtement protecteur de surfaces métalliques.**
Nanostrukturiertes Spezialmaterial als Schutzbeschichtung für Metalloberflächen
Specific nanostructured material, as a protective coating for metal surfaces.

(30) Priorité: 06.04.2007 FR 0754375
(43) Date de publication de la demande: 08.10.2008
(73) Titulaire: European Aeronautic Defence and Space Company EADS France Airbus Group SAS, 75016 Paris (FR); Université Pierre et Marie Curie (Paris 6), 75252 Paris Cedex 05 (FR); Centre National pour la Recherche Scientifique (CNRS), 75016 Paris (FR)
(72) Inventeur: Campazzi, Elisa, 92100 Boulogne Billancourt (FR); Lancelle-Beltran, Emmanuelle, 92220 Bagneux (FR); Sanchez, Clément, 91440 Bures sur Yvette (FR)
(74) Mandataire: Caillet, Isabelle

(56) Documents cités:
- WO-A-2005/045144
- FR-A- 2 899 906
- US-A- 5 993 967
- US-A1- 2003 157 344
- US-A1- 2005 020 758
- US-A1- 2006 275 627

## Description

La présente invention concerne des matériaux nanostructurés comme constituants de revêtements protecteurs de surfaces métalliques, en particulier pour des applications aéronautiques et aérospatiales, et leurs procédés de préparation.

Dans le domaine aéronautique, la protection contre la corrosion est généralement assurée par des traitements de surface à base de chrome VI, par exemple, au moyen d'un procédé d'oxydation anodique chromique, ou d'une couche de conversion.

Cependant, on a trouvé que le chrome VI était toxique, cancérigène et dangereux pour l'environnement. A terme son utilisation va être interdite.

Il existe donc un besoin de trouver un autre système assurant une protection, par exemple, contre la corrosion mais aussi contre les rayures ou autres, qui soit au moins aussi performant que ceux existant.

Des matériaux hybrides organiques/inorganiques préparés par voie sol-gel ont déjà été envisagés dans la technique.

Des revêtements présentant par exemple une résistance à l'abrasion et préparés par voie sol-gel sont connus des documents US 2005/0020758 et US 2003/0157344. Le document US 2005/0020758 décrit un revêtement transparent résistant à l'abrasion, obtenu à partir d'un silane à fonction époxy, d'un polysilane, d'un acide fort et d'un solvant. Ce revêtement est notamment destiné à être utilisé dans le domaine optique.

Le document US 2003/0157344 décrit un revêtement résistant aux chocs et à l'abrasion, obtenu à partir d'un époxysilane hydrolysable, d'un durcisseur de type silane hydrolysable, d'une charge éventuelle, d'un acide et d'un catalyseur.

Par exemple, le document US 2003/024432 décrit un revêtement ayant des propriétés anti-corrosion, préparé par voie sol-gel à partir d'un sel organométallique tel qu'un alcoxyzirconium, d'un organosilane, et d'un ou de plusieurs composés portant une fonction borate, zinc ou phosphate, en présence d'un catalyseur organique tel que l'acide acétique.

Les documents US 6 261 638 et EP 1 097 259 décrivent quant à eux des procédés pour empêcher la corrosion de métaux, comprenant l'application d'une solution de traitement à base de silanes polyfonctionnels et de silanes difonctionnels comportant dans leur chaîne, plusieurs atomes de soufre, respectivement.

Cependant, ces matériaux présentent l'inconvénient de ne pas être micro- ou nanostructurés, c'est-à-dire que la répartition des domaines organiques et inorganiques dans le matériau ne peut pas être maîtrisée à l'échelle micrométrique ou nanométrique. Cette répartition aléatoire peut conduire à des propriétés non reproductibles d'un matériau à un autre.

Un avantage du procédé sol-gel consiste à construire un réseau tridimensionnel à partir de précurseurs de départ dans des conditions dites douces, c'est-à-dire à une température inférieure à 200 °C, et dans un milieu eau ou eau/solvant moins nocif pour l'environnement que ceux utilisés pour les traitements de surface classiques.

Les précurseurs de départ généralement utilisés dans ledit procédé sol-gel sont des alcoxydes métalliques comprenant un ou plusieurs groupes hydrolysables. A titre d'exemples d'alcoxydes métalliques, on peut notamment citer les alcoxydes de silicium ou de zirconium, seuls ou en mélange.

L'article « The self-assembled nanophase particle (SNAP) process : a nanoscience approach to coatings », M. S. Donley et al, Progress in Organic Coatings, 47, 401-415, 2003, décrit des revêtements en un matériau amorphe, obtenus dans des conditions douces, à partir d'une solution aqueuse comprenant du tétraméthoxysilane et du glycidopropyltriméthoxysilane. Un inhibiteur de corrosion est ensuite introduit dans le matériau.

Le brevet US 6 929 826 décrit un procédé de traitement de surfaces métalliques à partir d'une composition aqueuse comprenant un alcoxysilane, un époxyalcoxysilane et de l'eau. Ce procédé comprend notamment les étapes de mélange des ingrédients de la composition, le vieillissement de ladite composition, l'addition d'un agent de réticulation, d'un tensioactif et éventuellement d'eau, puis l'application de la composition finale sur un substrat métallique et séchage dudit substrat.

Le demandeur a découvert de manière surprenante qu'un contrôle de structure à l'échelle nanométrique permet d'obtenir de nouvelles propriétés macroscopiques qui ne sont pas seulement la somme des propriétés de chacune des composantes telles que tenue mécanique, épaisseur et qualité du film, densité, coloration et caractère hydrophobe modulable à souhait, mais réellement des propriétés nouvelles. Elles résultent de la synergie de ces composantes à l'échelle nanométrique. En outre, cette maîtrise de la structure à l'échelle nanométrique conduit à une reproductibilité des propriétés.

Ce contrôle est atteint grâce à des matériaux nanostructurés.

Par matériaux nanostructurés, on entend des matériaux dont la structure est contrôlée à l'échelle nanométrique. Cette structure peut être vérifiée notamment par diffraction des rayons X et diffusion des rayons X aux petits angles, microscopie à transmission (ou TEM) ou microscopie à force atomique (ou AFM).

De tels matériaux sont connus de l'article "Designed hybrid organic-inorganic nanocomposites from functional nanobuilding blocks" de C. Sanchez et al, Chem. Mater., 2001, 13, 3061-3083, et sont synthétisés à partir de blocs élémentaires de taille nanométrique (ou nanoblocs élémentaires ou NBB (Nano-Building Blocks)) bien définis, de préférence pré- ou post-fonctionnalisés, et d'une résine polymère ou hybride organique/inorganique.

Une partie de ces matériaux, telle que la matrice obtenue par voie sol/gel, est amorphe, tandis que l'autre partie est constituée de domaines cristallins de taille nanométrique.

Ces matériaux peuvent comporter des fonctionnalités diverses qui permettent de conférer à un substrat (ou surface) notamment un alliage d'aluminium ou de titane, par exemple, une protection contre la corrosion, une résistance aux rayures, une bonne tenue mécanique et/ou une coloration tout en assurant une bonne adhérence sur le substrat métallique.

En outre, ces matériaux peuvent permettre la coexistence de plusieurs fonctionnalités différentes qui ne coexistent pas en temps normal, et peuvent être appliqués par une quelconque technique classique telle que, par exemple, par trempage dans un bain, dépôt sur substrat en rotation (ou spin-coating), aspersion, pulvérisation, enduction laminaire et dépôt au pinceau. Les composants individuels peuvent être conçus de manière à avoir une durée de vie compatible avec les cycles industriels, par exemple, supérieure ou égale à 12 mois, et être mélangés juste avant leur application. Leur formulation présente l'avantage supplémentaire d'utiliser des composants compatibles avec la réglementation environnementale, et notamment d'être majoritairement en milieu aqueux.

La présente invention a pour objet de nouveaux matériaux nanostructurés permettant de conférer de meilleures propriétés telles qu'une protection contre la corrosion, une résistance aux rayures, une bonne tenue mécanique et/ou une coloration tout en assurant une bonne adhérence sur un substrat métallique.

Les matériaux nanostructurés selon l'invention comprennent au moins un nanobloc élémentaire à base de silice, d'alumine, de zircone, d'oxyde de titane ou de cérium (IV), fonctionnalisé avec au moins deux agents de fonctionnalisation de formule (1), (2) ou (3) :

Z₄₋ₓSi((R')ₚ-F)ₓ (1)

Z_{4-x-y}(F'-(R')ₚ)_{y}Si((R')ₚ -F)ₓ. (2)

Z_{n-ma-mb}(F'-L)ₘₐM(L-F)_{mb} (3)

dans lesquelles :
chaque Z représente, indépendamment l'un de l'autre, un atome d'halogène tel que F, Cl, Br ou I, de préférence Cl ou Br, ou un groupement -OR ;
R représente un groupe alkyle de préférence en C₁₋₄, tel que méthyle, éthyle, n-propyle, i-propyle, n-butyle, s-butyle ou t-butyle, de préférence méthyle ou éthyle ;
x et y sont des nombres entiers allant de 1 à 3 à condition que 4-x≥1 pour la formule (1) et 4-x-y≥0 pour la formule (2) ;
chaque R' représente, indépendamment l'un de l'autre, un groupe espaceur organique choisi parmi les groupes alkylène de préférence en C₁₋₄, par exemple, méthylène, éthylène, propylène ou butylène ; alcénylène notamment en C₂₋₄ tels que vinylène, 1-propénylène et buténylène ; et arylène en C₆₋₁₀ tels que phénylène et naphtylène ;
p est égal à 0 ou 1 ;
chaque F est choisi parmi les groupes alkyle notamment en C₁₋₄, par exemple, méthyle, éthyle, propyle ou butyle ; les groupes alcényle en particulier en C₂₋₄, tels que vinyle, 1-propényle, 2-propényle et butényle ; les groupes alcynyle en particulier en C₂₋₄, tels que acétylényle et propargyle ; les groupes aryle en particulier en C₆₋₁₀, tels que phényle et naphthyle ; les groupes méthacryle ou méthacryloxy(alkyle en C₁₋₁₀) tel que méthacryloxypropyle ; les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone, tels que glycidyle et glycidyloxy(alkyle en C₁₋₁₀) ; les groupes halogénoalkyle en C₂₋₁₀ tels que chloropropyle ; les groupes perhalogénoalkyle en C₂₋₁₀ tels que perfluoropropyle ; les groupes mercaptoalkyle en C₂₋₁₀ tels que mercaptopropyle ; les groupes aminoalkyle en C₂₋₁₀ tels que 3-aminopropyle ; les groupes amino(alkyle en C₂₋₁₀)amino(alkyle en C₂₋₁₀) tels que 3-[(2-aminoéthyl)amino]propyle ; les groupes di(alkylène en C₂₋₁₀)triamino(alkyle en C₂₋₁₀) tel que 3-[diéthylènetriamino]propyle et les groupes imidazolyl(alkyle en C₂₋₁₀) ;
chaque F' et L sont chacun un ligand complexant monodentate ou polydentate, de préférence polydentate, par exemple, un acide carboxylique comme l'acide acétique, une β-dicétone comme l'acétylacétone, un β-cétoester comme l'acétoacétate de méthyle, un α- ou β-hydroxyacide comme l'acide lactique, un acide aminé comme l'alanine, une polyamine comme la (3-triméthoxysilyl-propyl)diéthylènetriamine (ou DETA), l'acide phosphonique et un phosphonate ;
M représente Al(III), Ce(III), Ce(IV), Zr(IV), Ti(IV), Sn(IV), Nb(V), V(V), Ta(V), Hf(V), de préférence Al(III), Ce(III), Ce(IV), Zr(IV) ou Ti(IV), ou une terre rare telle que Y(III), La(III) et Eu(III), le chiffre entre parenthèse étant la valence de l'atome M ;
n représente l'état de coordination de l'atome M ;
m représente le nombre de liaisons de coordination entre le chélatant L et le métal M ;
a et b sont des nombres entiers tels que ma+mb≤n.

Dans les formules (1) et (2), chaque ((R')ₚ-F) et ((R')ₚ-F') sont des groupes non hydrolysables, F étant une fonction présentant de préférence une affinité pour une éventuelle matrice organique ou hybride, et F' étant une fonction présentant de préférence une affinité pour la surface des nanoblocs élémentaires.

Dans la formule (3), (L-F) et (L-F') représentent chacun un groupe complexant le métal M via L et présentent respectivement une fonction F ayant de préférence une affinité pour une éventuelle matrice organique ou hybride, et une fonction F' présentant de préférence une affinité pour la surface des nanoblocs élémentaires.

Le ou les nanoblocs élémentaires peuvent être sous forme de clusters ou de nanoparticules, de préférence de nanoparticules de taille allant de 2 à 100 nm, mieux encore de 2 à 50 nm, et encore mieux de 2 à 20 nm, le diamètre de ces nanoparticules pouvant être mesuré par diffraction des rayons X et diffusion des rayons X aux petits angles, microscopie à transmission (ou TEM) ou diffusion de la lumière.

Ces nanoblocs élémentaires sont essentiellement à base d'au moins un oxyde métallique, l'oxyde métallique étant choisi par exemple, parmi les oxydes d'aluminium, de cérium IV, de silicium, de zirconium et de titane. Plusieurs procédés de synthèse peuvent être utilisés pour les préparer.

Un premier procédé consiste à les synthétiser à partir de sels métalliques, par précipitation. Des agents complexants peuvent être introduits dans le milieu réactionnel pour contrôler la taille des nanoblocs élémentaires formés et assurer leur dispersion dans le solvant par fonctionnalisation de 80 à 100 % de la surface des nanoblocs avec des agents complexants monodentates ou polydentates, tels que par exemple, acide carboxylique, β-dicétone, β-cétoester, α-ou β-hydroxyacide, phosphonate, polyamine et acide aminé. Le rapport pondéral entre les composantes minérale et organique est compris notamment entre 20 et 95 %.

Les nanoblocs élémentaires peuvent également être obtenus à partir d'au moins un alcoxyde ou halogénure de silicium, d'aluminium, de zirconium, de titane ou de cerium (IV), via des processus hydrolytiques ou non hydrolytiques. Dans le cas d'un processus hydrolytique, on réalise l'hydrolyse contrôlée d'au moins un précurseur alcoxyde ou halogénure de silicium, d'aluminium, de zirconium, de titane ou de cerium (IV) de formule générale :

M₁(Z₁)ₙ₁ (4),

(R₁')ₓ₁M₁(Z₁)ₙ₁₋ₓ₁ (5)

(L₁^{m1})ₓ₁M₁(Z₁)ₙ₁₋ₘ₁ₓ₁ (6),

ou

(R₁O)₃Si-R₂-Si(OR₁)₃ (7),

formules (4), (5), (6) et (7) dans lesquelles :
M₁ représente Al(III), Ce(IV), Si(IV), Zr(IV) ou Ti(IV), le chiffre entre parenthèse étant la valence de l'atome M₁ ;
n₁ représente la valence de l'atome M₁ ;
x₁ est un nombre entier allant de 1 à n₁-1 ;
Z₁ représente un atome d'halogène ou -OR₁ ;
R₁ représente un groupe alkyle, de préférence comprenant 1 à 4 atomes de carbone ;
R₁' représente un groupe non hydrolysable choisi parmi les groupes alkyle, notamment en C₁₋₄ ; les groupes alcényle en particulier en C₂₋₄ ; les groupes alcynyle en particulier en C₂₋₄ ; les groupes aryle en particulier en C₆₋₁₀ ; les groupes méthacryle et méthacryloxy(alkyle en C₁₋₁₀) ; et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone ;
L₁ est un ligand complexant monodentate ou polydentate, de préférence polydentate ;
m₁ représente l'indice d'hydroxylation du ligand L₁ ; et
R₂ représente un groupement non hydrolysable divalent choisi parmi les groupes alkylène de préférence en C₁₋₄, les groupes alcénylène en particulier en C₂₋₄, les groupes alcynylène en particulier en C₂₋₄ les groupes arylène en particulier en C₆₋₁₀, les groupes méthacryle et méthacryloxy(alkyle en C₁₋₁₀), et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone.

De préférence, R₁ représente un groupe méthyle ou éthyle ; R₁' représente un groupe non hydrolysable choisi parmi les groupes méthyle, éthyle, propyle, butyle, vinyle, 1-propényle, 2-propényle, butényle, acétylényle, propargyle, phényle, naphthyle, méthacryle, méthacryloxypropyle, glycidyle et glycidyloxy(alkyle en C₁₋₁₀) ; et L₁ est un ligand complexant choisi parmi les acides carboxyliques, les β-dicétones, les β-cétoesters, les α et β-hydroxyacides, les acides aminés et les phosphonates.

Par hydrolyse contrôlée, on entend une limitation de la croissance des espèces formées par contrôle de la quantité d'eau introduite dans le milieu et éventuellement par introduction d'un agent complexant de l'atome central métallique, ceci afin de réduire la réactivité des précurseurs.

Les nanoblocs élémentaires sont de préférence sous forme de nanoparticules amorphes ou cristallisées. Leur fonctionnalisation est réalisée soit directement au cours de leur synthèse, soit au cours d'une deuxième étape suivant leur synthèse, en présence d'un agent de fonctionnalisation tel que défini ci-dessus, et de préférence au cours d'une deuxième étape. On parle respectivement de pré- ou post-fonctionnalisation.

Selon l'invention, le taux de fonctionnalisation est de préférence supérieur à 50 %, mieux encore supérieur à 80 %.

Les matériaux nanostructurés selon l'invention, tels que définis ci-dessus, peuvent comprendre en outre une matrice polymère ou hybride inorganique/organique, de préférence hybride de type sol/gel.

Une fois les nanoblocs élémentaires synthétisés et fonctionnalisés, ils peuvent être introduits dans ladite matrice matrice. Cette matrice va servir de connecteur grâce auquel les blocs élémentaires vont former un réseau tridimensionnel.

Les matrices hybrides inorganiques/organiques sont typiquement obtenues par polycondensation d'au moins un alcoxyde métallique ou halogénure métallique, en présence d'un solvant, et éventuellement d'un catalyseur. Les alcoxydes métalliques ou halogénures métalliques employés sont choisis de préférence parmi ceux ayant pour formules générales :

M'Z'_{n'} (8)

R"_{x'}M' Z'_{n'-x'} (9)

L'_{m'x'}M' Z'_{m'x'} (10)

Z'_{n'-1}M'-R"'-M Z'_{n'-1} (11)

dans lesquelles :
n'représente la valence de l'atome métallique M', de préférence 3, 4 ou 5 ;
x' est un nombre entier allant de 1 à n'-1 ;
M' représente un atome métallique de valence III tel que Al ; de valence IV tel que Si, Ce, Zr et Ti ; ou de valence V tel que Nb. De préférence M' est le silicium (n'=4), le cérium (n'=4) ou le zirconium (n'=4), et encore plus préférentiellement le silicium ;
Z' représente un groupe hydrolysable choisi parmi les atomes d'halogènepar exemple, F, Cl, Br et I, de préférence Cl et Br ; les groupes alcoxy de préférence en C₁₋₄, tels que méthoxy, éthoxy, n-propoxy, i-propoxy et butoxy ; les groupes aryloxy en particulier en C₆₋₁₀, tels que phénoxy ; les groupes acyloxy en particulier en C₁₋₄, tels que acétoxy et propionyloxy ; et les groupes alkylcarbonyle en C₁₋₁₀ comme acétyle. De préférence, Z' représente un groupe alcoxy, et plus particulièrement un groupe éthoxy ou méthoxy ;
R" représente un groupement non hydrolysable monovalent choisi parmi les groupes alkyle de préférence en C₁₋₄, par exemple, méthyle, éthyle, propyle et butyle ; les groupes alcényle en particulier en C₂₋₄, tels que vinyle, 1-propényle, 2-propényle et butényle ; les groupes alcynyle en particulier en C₂₋₄ tels que acétylényle et propargyle ; les groupes aryle en particulier en C₆₋₁₀, tels que phényle et naphthyle ; les groupes méthacryle et méthacryloxy(alkyle en C₁₋₁₀) tel que méthacryloxypropyle ; et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone, tels que glycidyle et glycidyloxy(alkyle en C₁₋₁₀). R" représente de préférence un groupe méthyle ou glycidyloxy(alkyle en C₁₋₁₀) comme glycidyloxypropyle ;
R'" représente un groupement non hydrolysable divalent choisi parmi les groupes alkylène de préférence en C₁₋₄, par exemple, méthylène, éthylène, propylène et butylène ; les groupes alcénylène en particulier en C₂₋₄, tels que vinylène, 1-propénylène, 2-propénylène et buténylène ; les groupes alcynylène en particulier en C₂₋₄ tels que acétylénylène et propargylène ; les groupes arylène en particulier en C₆₋₁₀, tels que phénylène et naphthylène ; les groupes méthacryle et méthacryloxy(alkyle en C₁₋₁₀) tel que méthacryloxypropyle : et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone, tels que glycidyle et glycidyloxy(alkyle en C₁₋₁₀). R"' représente de préférence un groupe méthylène ou glycidyloxy(alkyle en C₁₋₁₀) comme glycidyloxypropyle ; et
L' représente un ligand complexant de préférence polydentate ,
m' représente l'indice d'hydroxylation du ligand L', avec m'=1 lorsque L' est un ligand monodentate, et m' ≥ 2 lorsque L' est un ligand polydentate.

Dans un mode de réalisation préféré, la matrice est obtenue à partir d'un mélange d'au moins trois alcoxydes de silicium :

Si(OR¹)₄

R²Si(OR¹)₃ et

R³R⁴Si(OR¹)₂

dans lesquels :
R¹ représente un groupe méthyle ou éthyle,
R² et R³ représentent chacun un groupe (méth)acrylate, vinyle, époxyalkyle ou époxyalcoxyalkyle dans lesquels le groupe alkyle est linéaire, ramifié et/ou cyclique, en C₁₋₁₀, et le groupe alcoxy comporte de 1 à 10 atomes, par exemple le groupe 3,4-époxycyclohexyléthyle ou glycidyloxy(alkyle en C₁₋₁₀) tel que glycidyloxypropyle, et
R⁴ représente un groupe alkyle en C₁₋₁₀ tel que méthyle.

De préférence, la proportion du précurseur R²Si(OR¹)₃ est majoritaire, tandis que celle du précurseur R³R⁴Si(OR¹)₂ est minoritaire, par exemple de 5 à 30 % en poids par rapport au poids total du mélange de précurseurs.

Dans un mode de réalisation particulier, la matrice peut être préparée à partir des trois alcoxydes de silicium R³R⁴Si(OR¹)₂, R²Si(OR¹)₃ et Si(OR¹)₄, par exemple en une proportion respective de 10 %, 60 % et 30 % en poids par rapport au poids total du mélange de précurseurs.

Le solvant est constitué majoritairement d'eau. De préférence, il comprend 80 à 100 % en poids d'eau par rapport au poids total du solvant, et éventuellement un alcool en C₁₋₄, de préférence l'éthanol ou l'isopropanol.

Le catalyseur est de préférence un acide, mieux encore l'acide acétique, ou du CO₂.

La solution à déposer peut être composée majoritairement d'un mélange de silanes, par exemple de 5 à 30 % en poids, de préférence de l'ordre de 20 % en poids par rapport au poids total de la solution. Le rapport molaire d'acide par rapport au silicium est préférentiellement autour de 1 %. Les rapports molaires des nanoblocs élémentaires fonctionnalisés ajoutés par rapport au silicium sont de préférence inférieurs à 20 %. Par exemple, ils sont préférentiellement de 5 % et de 10 % pour l'oxyde de cérium et l'oxyde de zirconium respectivement.

Les matériaux nanostructurés tels que décrits ci-dessus, peuvent comprendre en outre d'autres nanoblocs élémentaires fonctionnalisés ou non, différents de ceux définis ci-dessus.

Un autre objet de l'invention consiste en un procédé de préparation de matériaux nanostructurés selon l'invention.

Les matériau nanostructurés selon l'invention peuvent être préparés selon un procédé comprenant notamment les étapes consistant à :
d'une part
   a) préparer les nanoblocs élémentaires par un processus hydrolytique ou non, à partir d'au moins un alcoxyde métallique tel que décrit ci-dessus, et
   b) fonctionnaliser les nanoblocs élémentaires au moyen d'un agent de fonctionnalisation tel que décrit ci-dessus,
éventuellement d'autre part à
   c) préparer la matrice hybride organique/inorganique par voie sol-gel, à partir des trois alcoxydes de silicium tels que définis ci-dessus, la préparation par voie sol-gel se faisant en présence d'un solvant, et éventuellement d'un catalyseur tels que décrits ci-dessus,
puis éventuellement
   d) mélanger les nanoblocs élémentaires fonctionnalisés obtenus à l'étape b) et la matrice obtenue à l'étape c).

Dans l'étape de fonctionnalisation b), on mélange de préférence, les ingrédients suivants dans l'ordre indiqué ci-dessous,
1) les nanoblocs élémentaires obtenus à l'étape a), dispersés dans le solvant, de préférence l'eau
2) un acide, de préférence l'acide nitrique, de manière à ajuster le pH de la suspension à un pH acide, de préférence entre 3 et 4, et
3) le mélange d'au moins deux agents de fonctionnalisation, ajouté de préférence goutte à goutte,
puis on maintient la suspension sous agitation, de préférence pendant au moins 24h.

Au moins un additif tel que décrit ci-dessus peut être éventuellement ajouté lors de l'étape a) ou lors de l'étape d) ou lors des deux étapes a) et d).

Dans le cas où un additif est ajouté lors de l'étape a), il peut se former un matériau final de l'étape d) de type noyau/enveloppe, le noyau étant constitué par l'additif et l'enveloppe étant constituée par un nanobloc élémentaire.

Les additifs pouvant être utilisés dans l'invention sont notamment des agents tensioactifs pour améliorer la mouillabilité du sol sur le substrat métallique, tels que les polymères non ioniques fluorés vendus sous les marques commerciales FC 4432 et FC4430 par la société 3M ; des colorants, par exemple la rhodamine, la fluorescéine, le bleu de méthylène et l'éthyl-violet ; des agents de réticulation comme la (3-triméthoxysilylpropyl)diéthylènetriamine (ou DETA) ; des agents de couplage tels que l'aminopropyltriéthoxysilane (APTS) ; des nanopigments ; des inhibiteurs de corrosion tels que le benzotriazole ; ou leurs mélanges

Ce procédé s'effectue dans des conditions dites douces, c'est-à-dire à température ambiante de l'ordre de 20 à 25 °C, et sous pression atmosphérique.

L'invention a encore pour objet un article comprenant un substrat métallique, par exemple en titane, en aluminium ou en un de leurs alliages, et au moins un revêtement constitué d'au moins un matériau nanostructuré tel que défini ci-dessus.

Des exemples de substrats métalliques utilisés pour être revêtus par le matériau nanostructuré décrit ci-dessus, sont le titane, l'aluminium et leurs alliages respectifs, comme par exemple le titane TA6V, l'aluminium de la famille 2000, plus particulièrement l'Al 2024 plaqué ou non plaqué, l'aluminium de la famille 7000, plus particulièrement l'Al 7075 ou 7175 et l'aluminium de la famille 6000 ou 5000.

Les revêtements de telles surfaces métalliques, obtenus à partir des matériaux nanostructurés tels que décrits ci-dessus permettent notamment d'obtenir une protection contre la corrosion, une résistance aux rayures, coloration et caractère hydrophobe modulable à souhait, tout en adhérant bien à la surface du substrat métallique.

En outre, ces revêtements sont déposés au moyen de techniques simples à mettre en oeuvre sur les surfaces métalliques, par exemple par trempage dans un bain, dépôt sur substrat en rotation (ou spin-coating), aspersion, enduction laminaire ou dépôt au pinceau. En outre, ces techniques utilisent des produits compatibles avec l'environnement.

L'article selon l'invention peut être préparé par un procédé de revêtement classique qui comprend une étape de trempage dans un bain, de dépôt sur substrat en rotation, d'aspersion, d'enduction laminaire ou de dépôt au pinceau d'au moins un matériau nanostructuré tel que défini ci-dessus.

L'invention et les avantages qu'elle apporte seront mieux compris grâce aux exemples de réalisation donnés ci-après à titre indicatif.

### EXEMPLES

### Exemple 1 : Préparation d'une solution pour l'élaboration de nanoparticules à partir de SiO₂/GPTMS/DMDES (NBB1).

On a dilué 10 g. de suspension commerciale de nanoparticules de silice (silice colloïdale à 30 % en poids dans l'eau, vendue sous la marque commerciale Ludox® par la société Sigma-Aldrich, diamètre moyen de particules=12 nm) avec 50 g. d'eau déminéralisée. On a ajusté le pH de la suspension de silice à 4 par ajout d'une solution de HNO₃ (1 mol/l (ou M)). On a ensuite ajouté, goutte à goutte, un mélange de 30,3 g. de 3-glycidoxypropyltriméthoxysilane (GPTMS) et de 4 g. de diméthyldiéthoxysilane (DMDES) à la suspension. Puis on a laissé le tout sous agitation à température ambiante pendant 24 heures.

### Exemple 2 : Préparation d'une solution pour l'élaboration de nanoparticules à partir de SiO₂-NH₂/GPTMS/DMDES (NBB2)

On a dispersé 10 g. de suspension commerciale de nanoparticules de silice (silice colloïdale à 30 % en poids dans l'eau, vendue sous la marque commerciale Ludox® par la société Sigma-Aldrich, diamètre moyen de particules=12 nm) dans 60 g. d'eau déminéralisée. On a ajusté le pH de la suspension de silice à 9 par ajout d'une solution de HCl (1 M). On a ajouté 20 % en poids par rapport au poids total du mélange, d'aminopropyltriéthoxysilane. On maintenu la suspension sous agitation pendant 2h à température ambiante. On a isolé les particules par filtration puis on les a lavées à l'éthanol par centrifugation (3 fois 20 min à 10 000 tours/min) et enfin fait sécher à température ambiante pendant 8h.
On a dispersé 3 g. de nanoparticules fonctionnalisées NBB2 dans 60 g. d'eau déminéralisée. On a ajusté le pH de la suspension de silice à 4 par ajout d'une solution de HNO₃ (1 M). On a ensuite ajouté goutte à goutte un mélange de 30,3 g. de GPTMS et de 4 g. de DMDES à la suspension. Puis on a laissé le tout sous agitation à température ambiante pendant 24 heures.

### Exemple 3 : Préparation d'une solution pour l'élaboration de nanoparticules à partir de Al₂O₃/GPTMS/DMDES (NBB3)

On a dispersé 3 g. de nanoparticules Al₂O₃ (sous la forme de poudre vendue sous la marque commerciale Meliorum Technologies, diamètre moyen de particules=10 nm) dans 50 g. d'eau déminéralisée. On a ajusté le pH de la suspension d'oxyde d'aluminium à 4 par ajout d'une solution de HNO₃ (1 M). Ensuite on a ajouté goutte à goutte un mélange de 30,3 g. de GPTMS et de 4 g. de DMDES à la suspension. Puis on a laissé le tout est laissé sous agitation à température ambiante pendant 24 heures.

### Exemple 4 : Préparation d'une solution pour l'élaboration de nanoparticules à partir de ZrO₂/GPTMS/DMDES (NBB4)

On a dispersé 30 g. de suspension commerciale de nanoparticules d'oxyde de zirconium (suspension colloïdale à 10 % en poids dans l'eau, vendue sous la marque commerciale Pinnacle Zirconium Dioxyde® par la société Applied Nanoworks, diamètre moyen de particules=3-5 nm) dans 20 g. d'eau déminéralisée. On a ensuite ajouté goutte à goutte un mélange de 30,3 g. de GPTMS et de 4 g. de DMDES à la suspension. Puis on a laissé le tout est laissé sous agitation à température ambiante pendant 24 heures.

### Exemple 5 : Préparation d'une solution pour l'élaboration de nanoparticules à partir de SiO₂/GPTMS/DMDES + CeO₂-NH₂ (NBB5).

On a ajouté 1,65 g. d'acide 6-aminocaprique à 9,65 ml d'une solution de nanoparticules d'oxyde de cérium commercialisées par Rhodia (sous la marque commerciale Rhodigard W200, pH=8,5) (rapport molaire carboxylate/Ce=1). 4 heures après, on a ajouté 8 ml de cette suspension à la solution des NBB1 de l'exemple 1.

### Exemple 6 : Préparation d'une solution pour l'élaboration de nanoparticules à partir de SiO₂-NH₂/GPTMS/DMDES + CeO₂-NH₂ (NBB6).

On a opéré de la même manière que dans l'exemple 5 en remplaçant la solution des NBB1 par la solution des NBB2 de l'exemple 2.

### Exemple 7 : Préparation d'une solution pour l'élaboration de nanoparticules à partir de Al₂O₃/GPTMS/DMDES + CeO₂-NH₂ (NBB7).

On a opéré de la même manière que dans l'exemple 5 en remplaçant la solution des NBB1 par la solution des NBB3 de l'exemple 3.

### Exemple 8 : Préparation d'une solution pour l'élaboration de nanoparticules à partir de ZrO₂/GPTMS/DMDES + CeO₂-NH₂ (NBB8).

On a opéré de la même manière que dans l'exemple 5 en remplaçant la solution des NBB1 par la solution des NBB4 de l'exemple 4.

### Exemple 9 : Préparation d'une solution pour l'élaboration de nanoparticules à partir de SiO₂/GPTMS/DMDES + CeO₂-NH₂ + ZrO₂

On a agité un mélange tétrapropoxyzirconium (TPOZ)/CH₃COOH/H₂O (9.75g/5g/3.75g) 30 minutes avant d'être ajouté à la solution obtenue à l'exemple 5.

### Exemple 10 : Préparation d'une solution pour l'élaboration de nanoparticules à partir de SiO₂/GPTMS/DMDES + CeO₂-NH₂ + ZrO₂ + DETA + colorant.

On a ajouté goutte à goutte 6,63 g. d'une solution d'agent de réticulation, la (3-triméthoxysilylpropyl)diéthylènetriamine (DETA) de formule (OMe)₃Si(CH₂)₃NH(CH₂)₂NH(CH₂)₂NH₂, puis on a laissé la solution opaque reposer pendant 1 nuit à température ambiante sous agitation vive et régulière pour devenir de nouveau limpide. Enfin juste avant le dépôt, on a ajouté 50 mg à la solution d'un colorant, la rhodamine B, en quantité telle que sa concentration dans la solution finale soit d'environ 10⁻³M.

On a préparé un substrat en alliage Al 2024 T3 non plaqué de dimensions 125 mm x 80 mm x 1,6 mm, pour une surface totale de 1 dm² juste avant le dépôt, selon une méthodologie connue de l'homme de métier comme le dégraissage alcalin suivi d'un décapage chimique acide.
On a déposé le film sur le substrat par immersion (dip-coating) pendant 2 minutes et avec une vitesse de retrait 0,68 cm.s⁻¹, puis on l'a fait sécher en étuve 1h à 110 °C.

### Exemple 11 : Préparation d'une solution en vue de l'élaboration d'une matrice TMOS/GPTMS/DMDES + ZrO₂ + DETA + colorant.

A 65 ml d'une solution aqueuse d'acide acétique 0,05 M, on a ajouté goutte à goutte, sous agitation, à température ambiante, le mélange de 9,3 g. de tétraméthoxysilane (TMOS), 37,4 g. de 3-glycidoxypropyltriméthoxysilane (GPTMS) et 4,9 g. de diméthyldiéthoxysilane (DMDES). On a conservé cette solution sous agitation à température ambiante pendant un jour.
On a ajouté ensuite un mélange constitué d'une solution de tétrapropoxyzirconium (TPOZ) à 70% dans le propanol/CH₃COOH/H₂O en un rapport pondéral de 11,7g/6g/4,5g, préalablement agité pendant 30 minutes. On a agité la solution finale à température ambiante pendant 30 minutes, puis on a ajouté 7,96 g. de (3-triméthoxysilylpropyl)diéthylènetriamine goutte à goutte comme agent réticulant. On a laissé le tout pendant 15 heures à température ambiante sous agitation vive et régulière. On a ensuite ajouté 60 mg de rhodamine B en quantité telle que sa concentration dans la solution finale soit d'environ 10⁻³M.

On a préparé un substrat juste avant le dépôt de la même manière que dans l'exemple 10.
On a déposé un film sur le substrat par immersion (dip-coating) pendant 2 minutes et avec une vitesse de retrait 0,68 cm.s⁻¹, puis on l'a fait sécher en étuve 1 h. à 110 °C.

## Revendications

1. Matériau nanostructuré comprenant au moins un nanobloc élémentaire à base de silice, d'alumine, de zircone, d'oxyde de titane ou de cérium (IV), fonctionnalisé avec au moins deux agents de fonctionnalisation de formule (1), (2) ou (3) :
Z₄₋ₓSi((R')ₚ-F)ₓ (1)
Z_{4-x-y}(F'-(R')ₚ)_{y}Si((R')ₚ-F)ₓ. (2)
Z_{n-ma-mb}(F'-L)ₘₐM(L-F)_{mb} (3)
dans lesquelles :
chaque Z représente, indépendamment l'un de l'autre, un atome d'halogène ou un groupement -OR ;
R représente un groupe alkyle de préférence en C₁₋₄ ;
x et y sont des nombres entiers allant de 1 à 3 à condition que 4-x≥1 pour la formule (1) et 4-x-y≥0 pour la formule (2) ;
chaque R' représente, indépendamment l'un de l'autre, un groupe espaceur organique choisi parmi les groupes alkylène de préférence en C₁₋₄, alcénylène notamment en C₂₋₄, et arylène en C₆₋₁₀ ;
p est égal à 0 ou 1 ;
chaque F est choisi parmi les groupes alkyle notamment en C₁₋₄, les groupes alcényle en particulier en C₂₋₄, les groupes alcynyle en particulier en C₂₋₄, les groupes aryle en particulier en C₆₋₁₀, les groupes méthacryle ou méthacryloxy(alkyle en C₁₋₁₀), les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone, les groupes halogénoalkyle en C₂₋₁₀, les groupes perhalogénoalkyle en C₂₋₁₀, les groupes mercaptoalkyle en C₂₋₁₀, les groupes aminoalkyle en C₂₋₁₀, les groupes amino(alkyle en C₂₋₁₀)amino(alkyle en C₂₋₁₀), les groupes di(alkylène en C₂₋₁₀)triamino(alkyle en C₂₋₁₀) et les groupes imidazolyl(alkyle en C₂₋₁₀) ;
chaque F' et L sont chacun un ligand complexant monodentate ou polydentate, de préférence polydentate ;
M représente Al(III), Ce(III), Ce(IV), Zr(IV), Ti(IV), Sn(IV), Nb(V), V(V), Ta(V), Hf(V), ou une terre rare telle que Y(III), La(III) et Eu(III), le chiffre entre parenthèse étant la valence de l'atome M ;
n représente l'état de coordination de l'atome M ;
m représente le nombre de liaisons de coordination entre le chélatant L et le métal M ;
a et b sont des nombres entiers tels que ma+mb≤n.

2. Matériau nanostructuré selon la revendication 1, **caractérisé en ce que** M représente Al(III), Ce(III), Ce(IV), Zr(IV) ou Ti(IV).

3. Matériau nanostructuré selon la revendication 1 ou 2, **caractérisé en ce que** :
R représente un groupe méthyle ou éthyle ;
R' représente un groupe espaceur organique choisi parmi les groupes méthylène, éthylène, propylène, butylène, vinylène, 1-propénylène, buténylène, phénylène et naphtylène ;
F représente un groupe non hydrolysable choisi parmi les groupes méthyle, éthyle, propyle, butyle, vinyle, 1-propényle, 2-propényle, butényle, acétylényle, propargyle, phényle, naphthyle, méthacryle, méthacryloxypropyle, glycidyle, glycidyloxy(alkyle en C₁₋₁₀), chloropropyle, perfluoropropyle, mercaptopropyle, 3-aminopropyle, 3-[(2-aminoéthyl)amino]propyle et 3-[diéthylènetriamino]propyle ; et
F' et L sont choisis parmi les acides carboxyliques, les β-dicétones, les β-cétoesters, les α et β-hydroxyacides, les acides aminés, une polyamine, l'acide phosphonique et les phosphonates.

4. Matériau nanostructuré selon l'une quelconque des revendications précédentes, **caractérisé en ce que** le nanobloc est sous forme de nanoparticules présentant une taille allant de 2 à 100 nm.

5. Matériau nanostructuré selon l'une quelconque des revendications 1 à 4, **caractérisé en ce que** les nanoblocs élémentaires sont obtenus à partir d'au moins un alcoxyde ou halogénure de silicium, d'aluminium, de zirconium, de titane ou de cérium (IV), via un processus hydrolytique, ledit alcoxyde ou halogénure répondant à l'une des formules suivantes :
M₁(Z₁)ₙ₁ (4),
(R₁')ₓ₁M₁(z₁)ₙ₁₋ₓ₁ (5)
(L₁^{m1})ₓ₁M₁(Z₁)ₙ₁₋ₘ₁ₓ₁ (6),
ou
(R₁O)₃Si-R₂-Si(OR₁)₃ (7),
formules (4), (5), (6) et (7) dans lesquelles :
M₁ représente Al(III), Ce(IV), Si(IV), Zr(IV) ou Ti(IV), le chiffre entre parenthèse étant la valence de l'atome M₁ ;
n₁ représente la valence de l'atome M₁ ;
x₁ est un nombre entier allant de 1 à n₁-1 ;
Z₁ représente un atome d'halogène ou -OR₁ ;
R₁ représente un groupe alkyle, de préférence comprenant 1 à 4 atomes de carbone ;
R₁' représente un groupe non hydrolysable choisi parmi les groupes alkyle, notamment en C₁₋₄, les groupes alcényle en particulier en C₂₋₄, les groupes alcynyle en particulier en C₂₋₄, les groupes aryle en particulier en C₆₋₁₀, les groupes méthacryle et méthacryloxy(alkyle en C₁₋₁₀), et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone ;
L₁ est un ligand complexant monodentate ou polydentate, de préférence polydentate ;
m₁ représente l'indice d'hydroxylation du ligand L₁ ; et
R₂ représente un groupement non hydrolysable divalent choisi parmi les groupes alkylène de préférence en C₁₋₄, les groupes alcénylène en particulier en C₂₋₄, les groupes alcynylène en particulier en C₂₋₄ les groupes arylène en particulier en C₆₋₁₀, les groupes méthacryle et méthacryloxy(alkyle en C₁₋₁₀), et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone.

6. Matériau nanostructuré selon la revendication 5, **caractérisé en ce que** R₁ représente un groupe méthyle ou éthyle ; R₁' représente un groupe non hydrolysable choisi parmi les groupes méthyle, éthyle, propyle, butyle, vinyle, 1-propényle, 2-propényle, butényle, acétylényle, propargyle, phényle, naphthyle, méthacryle, méthacryloxypropyle, glycidyle et glycidyloxy(alkyle en C₁₋₁₀) ; et L₁ est un ligand complexant choisi parmi les acides carboxyliques, les β-dicétones, les β-cétoesters, les α et β-hydroxyacides, les acides aminés l'acide phosphonique et les phosphonates.

7. Matériau nanostructuré selon l'une quelconque des revendications précédentes, comprenant en outre une matrice polymère ou hybride organique/inorganique.

8. Matériau nanostructuré selon la revendication 7, **caractérisé en ce que** la matrice est une matrice hybride organique/inorganique obtenue par polycondensation d'au moins un alcoxyde métallique ou halogénure métallique en présence d'un solvant, et éventuellement d'un catalyseur.

9. Matériau nanostructuré selon la revendication 8, **caractérisé en ce que** l'alcoxyde métallique ou halogénure métallique a pour formule générale :
M'Z_{n'} (8)
R"_{x'}M' Z'_{n'-x'} (9)
L'_{m'x'}M' Z'_{m'x'} (10)
Z'ₙ₋₁M'-R"'-M Z'ₙ₋₁ (11)
dans lesquelles :
n'représente la valence de l'atome métallique M', de préférence 3, 4 ou 5 ;
x' est un nombre entier allant de 1 à n'-1 ;
M' représente un atome métallique de valence III tel que Al, de valence IV tel que Si, Ce, Zr et Ti, ou de valence V tel que Nb ;
Z' représente un groupe hydrolysable choisi parmi les atomes d'halogène, les groupes alcoxy de préférence en C₁₋₄, les groupes aryloxy en particulier en C₆₋₁₀, les groupes acyloxy en particulier en C₁₋₄, et les groupes alkylcarbonyle en C₁₋₁₀ ;
R" représente un groupement non hydrolysable monovalent choisi parmi les groupes alkyle de préférence en C₁₋₄, les groupes alcényle en particulier en C₂₋₄, les groupes alcynyle en particulier en C₂₋₄, les groupes aryle en particulier en C₆₋₁₀, les groupes (méth)acryle, méthacryloxy(alkyle en C₁₋₁₀), et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone ;
R'" représente un groupement non hydrolysable divalent choisi parmi les groupes alkylène de préférence en C₁₋₄, les groupes alcénylène en particulier en C₂₋₄, les groupes alcynylène en particulier en C₂₋₄ les groupes arylène en particulier en C₆₋₁₀, les groupes méthacryle et méthacryloxy(alkyle en C₁₋₁₀), et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone ; et
L' représente un ligand complexant de préférence polydentate ,
m' représente l'indice d'hydroxylation du ligand L'.

10. Matériau nanostructuré selon la revendication 9, **caractérisé en ce que** :
n' est égal à 4 ;
x' est un nombre entier allant de 1 à 3 ;
M' représente un atome de silicium, de cérium ou de zirconium ;
Z' représente un groupe hydrolysable choisi parmi Cl et Br, les groupes méthoxy, éthoxy, n-propoxy, i-propoxy, butoxy, phénoxy, acétoxy, propionyloxy et acétyle ;
R" représente un groupement non hydrolysable monovalent choisi parmi les groupes méthyle, éthyle, propyle, butyle, vinyle, 1-propényle, 2-propényle, butényle, acétylényle, propargyle, phényle, naphthyle, méthacryle, méthacryloxypropyle, glycidyle et glycidyloxy(alkyle en C₁₋₁₀) ;
R"' représente un groupement non hydrolysable divalent choisi parmi les groupes méthylène, éthylène, propylène, butylène, vinylène, 1-propénylène, 2-propénylène, buténylène, acétylénylène, propargylène, phénylène, naphthylène, méthacryle, méthacryloxypropyle, glycidyle et glycidyloxy(alkyle en C₁₋₁₀) ; et
L' représente un acide carboxylique, une β-dicétone, un β-cétoester, un α ou β-hydroxyacide, un acide aminé, l'acide phosphonique ou un phosphonate.

11. Matériau nanostructuré selon l'une quelconque des revendications précédentes, comprenant en outre au moins un nanobloc élémentaire fonctionnalisé différent de celui défini à la revendication 1, ou non fonctionnalisé.

12. Procédé de préparation d'un matériau nanostructuré selon l'une quelconque des revendications 1 à 6, comprenant les étapes consistant à :
(a) préparer les nanoblocs élémentaires par un processus hydrolytique ou non-hydrolytique à partir d'au moins un alcoxyde métallique ou halogénure métallique tel que défini dans les revendications 5 et 6, et
(b) fonctionnaliser les nanoblocs élémentaires au moyen d'un agent de fonctionnalisation, tel que défini dans la revendication 1.

13. Procédé de préparation d'un matériau nanostructuré selon l'une quelconque des revendications 7 à 10, comprenant d'une part, le procédé selon la revendication 12, et d'autre part, les étapes consistant à :
(c) préparer la matrice hybride organique/inorganique par voie sol-gel, à partir d'au moins un alcoxyde métallique tel que défini dans la revendication 9 ou 10, la préparation par voie sol-gel se faisant en présence d'un solvant, et éventuellement d'un catalyseur,
puis à
(d) mélanger les nanoblocs élémentaires fonctionnalisés obtenus à l'étape b) et la matrice obtenue à l'étape c).

14. Procédé de préparation selon la revendication 12 ou 13, **caractérisé en ce qu'**au moins un additif est ajouté lors de l'étape a) ou lors de l'étape d) ou lors des deux étapes a) et d).

15. Procédé de préparation selon la revendication 14, **caractérisé en ce qu'**un additif est ajouté lors de l'étape a) et que le matériau final de l'étape d) est de type noyau/enveloppe, le noyau étant constitué par l'additif et l'enveloppe étant constituée par un nanobloc élémentaire.

16. Procédé de préparation selon la revendication 14 ou 15, **caractérisé en ce que** l'additif est choisi parmi des agents tensioactifs pour améliorer la mouillabilité du sol sur le substrat métallique, des colorants, des agents de réticulation, des agents de couplage, des inhibiteurs de corrosion et leurs mélanges.

17. Utilisation du matériau nanostructuré selon l'une quelconque des revendications 1 à 11, dans l'aéronautique et l'aérospatiale, comme revêtement protecteur de surfaces métalliques.

18. Article **caractérisé en ce qu'**il comprend un substrat métallique et au moins un revêtement constitué d'au moins un matériau nanostructuré selon l'une quelconque des revendications 1 à 11.

19. Article selon la revendication 18, **caractérisé en ce que** le substrat métallique est en titane, en aluminium ou en un de leurs alliages.

20. Procédé de préparation d'un article selon la revendication 18 ou 19, caractérisé en qu'il comprend une étape de trempage dans un bain, de dépôt sur substrat en rotation, d'aspersion, d'enduction laminaire ou de dépôt au pinceau d'au moins un matériau nanostructuré selon l'une quelconque des revendications 1 à 11.

## Patentansprüche

1. Nanostrukturiertes Material, umfassend mindestens einen Nanogrundblock auf der Basis von Siliziumdioxid, Aluminiumoxid, Zirkonoxid, Titanoxid oder Cer(IV)oxid, der mit mindestens zwei Funktionalisierungsmitteln der Formel (1), (2) oder (3) funktionalisiert ist:
Z₄₋ₓSi((R')ₚ-F)ₓ (1)
Z_{4-x-y}(F'-(R')ₚ)_{y}Si((R')ₚ-F)ₓ. (2)
Z_{n-ma-mb}(F'-L)ₘₐM(L-F)_{mb} (3),
in denen:
Z jeweils unabhängig voneinander ein Halogenatom oder eine Gruppe -OR darstellt;
R eine Alkylgruppe, vorzugsweise C₁₋₄, darstellt;
x und y ganze Zahlen von 1 bis 3 sind, mit der Maßgabe, dass 4-x ≥ 1 für die Formel (1) und 4-x-y ≥ 0 für die Formel (2);
R' jeweils unabhängig voneinander eine organische Spacergruppe darstellt, die aus Alkylen-, vorzugsweise C₁₋₄, Alkenylen-, insbesondere C₂₋₄, und C₆₋₁₀Arylengruppen ausgewählt ist;
p gleich 0 oder 1 ist;
F jeweils aus Alkylgruppen, insbesondere C₁₋₄, Alkenylgruppen, insbesondere C₂₋₄, Alkinylgruppen, insbesondere C₂₋₄, Arylgruppen, insbesondere C₆₋₁₀, Methacryl- oder Methacryloxy(C₁₋₁₀alkyl)-Gruppen, Epoxyalkyl- oder Epoxyalkoxyalkylgruppen, in denen die Alkylgruppe eine gerade, verzweigte oder cyclische C₁₋₁₀Alkylgruppe ist und die Alkoxygruppe 1 bis 10 Kohlenstoffatome enthält, HalogenC₂₋₁₀alkylgruppen, PerhalogenC₂₋₁₀alkylgruppen, MercaptoC₂₋₁₀alkylgruppen, AminoC₂₋₁₀alkylgruppen, Amino (C₂₋₁₀alkyl) amino (C₂₋₁₀alkyl) - Gruppen, Di(C₂₋₁₀alkylen)triamino(C₂₋₁₀alkyl)-Gruppen und Imidazolyl(C₂₋₁₀alkyl)-Gruppen ausgewählt ist;
F' und L jeweils ein einzähniger oder mehrzähniger, vorzugsweise mehrzähniger, komplexierender Ligand sind; M für Al(III), Ce(III), Ce(IV), Zr(IV), Ti(IV), Sn(IV), Nb(V), V(V), Ta(V), Hf(V) oder eine Seltenerde, wie Y(III), La(III) und Eu(III), steht, wobei die Zahl in Klammern die Valenz des Atoms M ist;
n den Koordinationszustand des Atoms M darstellt;
m die Anzahl an Koordinationsbindungen zwischen dem Chelatbildner L und dem Metall M darstellt;
a und b ganze Zahlen sind, derart, dass ma + mb ≤ n.

2. Nanostrukturiertes Material nach Anspruch 1, **dadurch gekennzeichnet, dass** M für Al(III), Ce(III), Ce(IV), Zr(IV) oder Ti(IV) steht.

3. Nanostrukturiertes Material nach Anspruch 1 oder 2, **dadurch gekennzeichnet, dass**:
R eine Methyl- oder Ethylgruppe darstellt;
R' eine organische Spacergruppe darstellt, die aus Methylen-, Ethylen-, Propylen-, Butylen-, Vinylen-, 1-Propenylen-, Butenylen-, Phenylen- und Naphthylengruppen ausgewählt ist;
F eine nicht-hydrolysierbare Gruppe darstellt, die aus Methyl-, Ethyl-, Propyl-, Butyl-, Vinyl-, 1-Propenyl-, 2-Propenyl-, Butenyl-, Acetylenyl-, Propargyl-, Phenyl-, Naphthyl-, Methacryl-, Methacryloxypropyl-, Glycidyl-, Glycidyloxy(C₁₋₁₀alkyl)-, Chlorpropyl-, Perfluorpropyl-, Mercaptopropyl-, 3-Aminopropyl-, 3-[(2-Aminoethyl)amino]propyl- und 3-[Diethylentriamino]propylgruppen ausgewählt ist;
und F' und L aus Carbonsäuren, β-Diketonen, β-Ketoestern, α- und β-Hydroxysäuren, Aminosäuren, einem Polyamin, Phosphonsäure und Phosphonaten ausgewählt sind.

4. Nanostrukturiertes Material nach einem der vorhergehenden Ansprüche, **dadurch gekennzeichnet, dass** der Nanoblock in Form von Nanopartikeln vorliegt, die eine Größe von 2 bis 100 nm aufweisen.

5. Nanostrukturiertes Material nach einem der Ansprüche 1 bis 4, **dadurch gekennzeichnet, dass** die Nanogrundblöcke ausgehend von mindestens einem Silizium-, Aluminium-, Zirkon-, Titan- oder Cer(IV)alkoxid oder -halogenid über ein hydrolytisches Verfahren erhalten werden, wobei das Alkoxid oder Halogenid einer der folgenden Formeln entspricht:
M₁(Z₁)ₙ₁ (4),
(R₁')ₓ₁M₁(Z₁)ₙ₁₋ₓ₁ (5)
(L₁^{m1})ₓ₁M₁(Z₁)ₙ₁₋ₘ₁ₓ₁ (6)
oder
(R₁O)₃Si-R₂-Si(OR₁)₃ (7),
wobei in den Formeln (4), (5), (6) und (7):
M₁ für Al(III), Ce(IV), Si(IV), Zr(IV) oder Ti(IV) steht, wobei die Zahl in Klammern die Valenz des Atoms M₁ ist;
n₁ die Valenz des Atoms M₁ darstellt;
x₁ eine ganze Zahl von 1 bis n₁-1 ist;
Z₁ ein Halogenatom oder -OR₁ darstellt;
R₁ eine Alkylgruppe darstellt, die vorzugsweise 1 bis 4 Kohlenstoffatome umfasst;
R₁' eine nicht-hydrolysierbare Gruppe darstellt, die aus Alkylgruppen, insbesondere C₁₋₄, Alkenylgruppen, insbesondere C₂₋₄, Alkinylgruppen, insbesondere C₂₋₄, Arylgruppen, insbesondere C₆₋₁₀, Methacryl- und Methacryloxy(C₁₋₁₀alkyl)-Gruppen und Epoxyalkyl- oder Epoxyalkoxyalkylgruppen, in denen die Alkylgruppe eine gerade, verzweigte oder cyclische C₁₋₁₀Alkylgruppe ist und die Alkoxygruppe 1 bis 10 Kohlenstoffatome enthält, ausgewählt ist;
L₁ ein einzähniger oder mehrzähniger, vorzugsweise mehrzähniger, komplexierender Ligand ist;
m₁ die Hydroxylzahl des Liganden L₁ darstellt und
R₂ eine divalente nicht-hydrolysierbare Gruppe darstellt, die aus Alkylengruppen, vorzugsweise C₁₋₄, Alkenylengruppen, insbesondere C₂₋₄, Alkinylengruppen, insbesondere C₂₋₄, Arylengruppen, insbesondere C₆₋₁₀, Methacryl- und Methacryloxy(C₁₋₁₀alkyl)-Gruppen und Epoxyalkyl- oder Epoxyalkoxyalkylgruppen, in denen die Alkylgruppe eine gerade, verzweigte oder cyclische C₁₋₁₀Alkylgruppe ist und die Alkoxygruppe 1 bis 10 Kohlenstoffatome enthält, ausgewählt ist.

6. Nanostrukturiertes Material nach Anspruch 5, **dadurch gekennzeichnet, dass** R₁ eine Methyl- oder Ethylgruppe darstellt; R₁' eine nicht-hydrolysierbare Gruppe, ausgewählt aus Methyl-, Ethyl-, Propyl-, Butyl-, Vinyl-, 1-Propenyl-, 2-Propenyl-, Butenyl-, Acetylenyl-, Propargyl-, Phenyl-, Naphthyl-, Methacryl-, Methacryloxypropyl-, Glycidyl- und Glycidyloxy(C₁₋₁₀alkyl)-Gruppen, darstellt; und L₁ ein aus Carbonsäuren, β-Diketonen, β-Ketoestern, α- und β-Hydroxysäuren, Aminosäuren, Phosphonsäure und Phosphonaten ausgewählter komplexierender Ligand ist.

7. Nanostrukturiertes Material nach einem der vorhergehenden Ansprüche, das außerdem eine Polymer- oder organische/anorganische Hybridmatrix umfasst.

8. Nanostrukturiertes Material nach Anspruch 7, **dadurch gekennzeichnet, dass** die Matrix eine organische/anorganische Hybridmatrix ist, die durch Polykondensation mindestens eines Metallalkoxids oder Metallhalogenids in Gegenwart eines Lösungsmittels und gegebenenfalls eines Katalysators erhalten wird.

9. Nanostrukturiertes Material nach Anspruch 8, **dadurch gekennzeichnet, dass** das Metallalkoxid oder Metallhalogenid die folgende allgemeine Formel hat:
M'Z'_{n'} (8)
R"_{x'}M' Z'_{n'-x'} (9)
L'_{m'x'}M' Z'_{m'x'} (10)
Z'_{n'-1}M'-R"'-M Z'_{n'-1} (11),
in denen:
n' die Valenz des Metallatoms M', vorzugsweise 3, 4 oder 5, darstellt;
x' ist eine ganze Zahl von 1 bis n'-1 ist;
M' ein Metallatom der Valenz III, wie Al, der Valenz IV, wie Si, Ce, Zr und Ti, oder der Valenz V, wie Nb, darstellt;
Z' eine hydrolysierbare Gruppe darstellt, die aus Halogenatomen, Alkoxygruppen, vorzugsweise C₁₋₄, Aryloxygruppen, insbesondere C₆₋₁₀, Acyloxygruppen, insbesondere C₁₋₄, und C₁₋₁₀Alkylcarbonylgruppen ausgewählt ist;
R" eine monovalente nicht-hydrolysierbare Gruppe darstellt, die aus Alkylgruppen, vorzugsweise C₁₋₄, Alkenylgruppen, insbesondere C₂₋₄, Alkinylgruppen, insbesondere C₂₋₄, Arylgruppen, insbesondere C₆₋₁₀, (Meth)Acryl-, Methacryloxy(C₁₋₁₀alkyl)-Gruppen und Epoxyalkyl- oder Epoxyalkoxyalkylgruppen, in denen die Alkylgruppe eine gerade, verzweigte oder cyclische C₁₋₁₀Alkylgruppe ist und die Alkoxygruppe 1 bis 10 Kohlenstoffatome enthält, ausgewählt ist;
R''' eine divalente nicht-hydrolysierbare Gruppe darstellt, die aus Alkylengruppen, vorzugsweise C₁₋₄, Alkenylengruppen, insbesondere C₂₋₄, Alkinylengruppen, insbesondere C₂₋₄, Arylengruppen, insbesondere C₆₋₁₀, Methacryl- und Methacryloxy(C₁₋₁₀alkyl)-Gruppen und Epoxyalkyl- oder Epoxyalkoxyalkylgruppen, in denen die Alkylgruppe eine gerade, verzweigte oder cyclische C₁₋₁₀Alkylgruppe ist und die Alkoxygruppe 1 bis 10 Kohlenstoffatome enthält, ausgewählt ist; und
L' einen, vorzugsweise mehrzähnigen, komplexierenden Liganden darstellt;
m' die Hydroxylzahl des Liganden L' darstellt.

10. Nanostrukturiertes Material nach Anspruch 9, **dadurch gekennzeichnet, dass**:
n' gleich 4 ist;
x' eine ganze Zahl von 1 bis 3 ist;
M' ein Silizium-, Cer- oder Zirkonatom darstellt;
Z' eine hydrolysierbare Gruppe, ausgewählt aus Cl und Br, Methoxy-, Ethoxy-, n-Propoxy-, i-Propoxy-, Butoxy-, Phenoxy-, Acetoxy-, Propionyloxy- und Acetylgruppen, darstellt;
R" eine monovalente nicht-hydrolysierbare Gruppe, ausgewählt aus Methyl-, Ethyl-, Propyl-, Butyl-, Vinyl-, 1-Propenyl-, 2-Propenyl-, Butenyl-, Acetylenyl-, Propargyl-, Phenyl-, Naphthyl-, Methacryl-, Methacryloxypropyl-, Glycidyl- und Glycidyloxy(C₁₋₁₀alkyl)-Gruppen, darstellt;
R''' eine divalente nicht-hydrolysierbare Gruppe, ausgewählt aus Methylen-, Ethylen-, Propylen-, Butylen-, Vinylen-, 1-Propenylen-, 2-Propenylen-, Butenylen-, Acetylenylen-, Propargylen-, Phenylen-, Naphthylen-, Methacryl-, Methacryloxypropyl-, Glycidyl- und Glycidyloxy(C₁₋₁₀alkyl)-Gruppen, darstellt; und
L' eine Carbonsäure, ein β-Diketon, einen β-Ketoester, eine α- oder β-Hydroxysäure, eine Aminosäure, Phosphonsäure oder ein Phosphonat darstellt.

11. Nanostrukturiertes Material nach einem der vorhergehenden Ansprüche, das außerdem mindestens einen funktionalisierten Nanogrundblock, der sich von demjenigen nach Anspruch 1 unterscheidet, oder einen nicht-funktionalisierten Nanogrundblock umfasst.

12. Verfahren zur Herstellung eines nanostrukturierten Materials nach einem der Ansprüche 1 bis 6, das die folgenden Schritte umfasst:
(a) Herstellen der Nanogrundblöcke durch ein hydrolytisches oder nicht-hydrolytisches Verfahren ausgehend von mindestens einem Metallalkoxid oder Metallhalogenid nach den Ansprüchen 5 und 6; und
(b) Funktionalisieren der Nanogrundblöcke mithilfe eines Funktionalisierungsmittels nach Anspruch 1.

13. Verfahren zur Herstellung eines nanostrukturierten Materials nach einem der Ansprüche 7 bis 10, das einerseits das Verfahren nach Anspruch 12 und andererseits die folgenden Schritte umfasst:
(c) Herstellen der organischen/anorganischen Hybridmatrix mittels Sol-Gel ausgehend von mindestens einem Metallalkoxid nach Anspruch 9 oder 10, wobei die Herstellung mittels Sol-Gel in Gegenwart eines Lösungsmittels und gegebenenfalls eines Katalysators erfolgt; und dann
(d) Mischen der in Schritt b) erhaltenen funktionalisierten Nanogrundblöcke und der in Schritt c) erhaltenen Matrix.

14. Herstellungsverfahren nach Anspruch 12 oder 13, **dadurch gekennzeichnet, dass** mindestens ein Additiv während Schritt a) oder während Schritt d) oder während beider Schritte a) und d) hinzugefügt wird.

15. Herstellungsverfahren nach Anspruch 14, **dadurch gekennzeichnet, dass** ein Additiv während Schritt a) zugegeben wird und dass das endgültige Material des Schritts d) vom Kern/Hülle-Typ ist, wobei der Kern von dem Additiv gebildet wird und die Hülle von einem Nanogrundblock gebildet wird.

16. Herstellungsverfahren nach Anspruch 14 oder 15, **dadurch gekennzeichnet, dass** das Additiv aus oberflächenaktiven Mitteln zur Verbesserung der Benetzbarkeit des Sols auf dem Metallsubstrat, Farbstoffen, Vernetzungsmitteln, Kupplungsmitteln, Korrosionsinhibitoren und ihren Gemischen ausgewählt ist.

17. Verwendung des nanostrukturierten Materials nach einem der Ansprüche 1 bis 11 in der Luft- und Raumfahrt als Schutzbeschichtung für metallische Oberflächen.

18. Gegenstand, **dadurch gekennzeichnet, dass** er ein Metallsubstrat und mindestens eine Beschichtung umfasst, die aus mindestens einem nanostrukturierten Material nach einem der Ansprüche 1 bis 11 besteht.

19. Artikel nach Anspruch 18, **dadurch gekennzeichnet, dass** das Metallsubstrat aus Titan, Aluminium oder aus einer ihrer Legierungen ist.

20. Verfahren zur Herstellung eines Gegenstands nach Anspruch 18 oder 19, **dadurch gekennzeichnet, dass** es einen Schritt des Eintauchens in ein Bad, des Aufbringens auf ein Substrat mittels Rotations-, Spritz- oder Laminarbeschichtung oder des Aufbringens mit einem Pinsel mindestens eines nanostrukturierten Materials nach einem der Ansprüche 1 bis 11 umfasst.

## Claims

1. Nanostructured material comprising at least one nano-building block based on silica, alumina, zirconia, titanium oxide or cerium (IV) oxide, functionalized with at least two functionalizing agents of formula (1), (2) or (3) :
Z₄₋ₓSi((R')ₚ-F)ₓ (1)
Z_{4-x-y}(F'-(R')ₚ)_{y}Si((R')ₚ-F)ₓ (2)
Z_{n-ma-mb}(F'- L)ₘₐM(L-F)_{mb} (3)
in which:
each Z represents, independently of one another, a halogen atom or an -OR group;
R represents an alkyl, preferably C₁₋₄ alkyl, group;
x and y are integers ranging from 1 to 3 on condition that 4-x ≥ 1 for the formula (1) and 4-x-y ≥ 0 for the formula (2);
each R' represents, independently of one another, an organic spacer group chosen from alkylene, preferably C₁₋₄ alkylene, groups, alkenylene, especially C₂₋₄ alkenylene, groups and C₆₋₁₀ arylene groups;
p is equal to 0 or 1;
each F is chosen from alkyl groups, especially C₁₋₄ alkyl groups, alkenyl groups, in particular C₂₋₄ alkenyl groups, alkynyl groups, in particular C₂₋₄ alkynyl groups, aryl groups, in particular C₆₋₁₀ aryl groups, methacryl or methacryloxy(C₁₋₁₀ alkyl) groups, epoxyalkyl or epoxyalkoxyalkyl groups in which the alkyl group is linear, branched or cyclic, and is a C₁₋₁₀ alkyl group, and the alkoxy group comprises from 1 to 10 carbon atoms, C₂₋₁₀ haloalkyl groups, C₂₋₁₀ perhaloalkyl groups, C₂₋₁₀ mercaptoalkyl groups, C₂₋₁₀ aminoalkyl groups, amino (C₂₋₁₀ alkyl) amino (C₂₋₁₀ alkyl) groups, di(C₂₋₁₀ alkylene) triamino (C₂₋₁₀ alkyl) groups and imidazolyl (C₂₋₁₀ alkyl) groups;
each F' and L are, each one, a monodentate or polydentate complexing ligand, preferably a polydentate complexing ligand;
M represents Al(III), Ce(III), Ce(IV), Zr(IV), Ti(IV), Sn(IV), Nb(V), V(V), Ta(V), Hf(V), or a rare earth such as Y(III), La(III) and Eu(III), the number between brackets being the valency of the M atom;
n represents the coordination state of the M atom;
m represents the number of coordination bonds between the chelating agent L and the metal M;
a and b are integers such that ma + mb = n.

2. Nanostructured material according to Claim 1, **characterized in that** M represents Al(III), Ce(III), Ce(IV), Zr(IV) or Ti(IV).

3. Nanostructured material according to Claim 1 or 2, **characterized in that**:
R represents a methyl or ethyl group;
R' represents an organic spacer group chosen from methylene, ethylene, propylene, butylene, vinylene, 1-propenylene, butenylene, phenylene and naphthylene groups;
F represents a non-hydrolysable group chosen from methyl, ethyl, propyl, butyl, vinyl, 1-propenyl, 2-propenyl, butenyl, acetylenyl, propargyl, phenyl, naphthyl, methacryl, methacryloxypropyl, glycidyl, glycidyloxy(C₁₋₁₀ alkyl), chloropropyl, perfluoropropyl, mercaptopropyl, 3-aminopropyl, 3-[(2-aminoethyl)amino]propyl and 3-[diethylenetriamino]propyl groups; and
F' and L are chosen from carboxylic acids, β-diketones, β-keto esters, α- and β-hydroxy acids, amino acids, a polyamine, phosphonic acid and phosphonates.

4. Nanostructured material according to any one of the preceding claims, **characterized in that** the nanoblock is in the form of nanoparticles having a size ranging from 2 to 100nm.

5. Nanostructured material according to any one of Claims 1 to 4, **characterized in that** the nano-building blocks are obtained from at least one alkoxide or halide of silicon, aluminium, zirconium, titanium or cerium (IV), via a hydrolytic process, said alkoxide or halide corresponding to one of the following formulae:
M₁(Z₁)ₙ₁ (4),
(R₁')ₓ₁M₁(Z₁)ₙ₁₋ₓ₁ (5),
(L₁^{m1})ₓ₁M₁(Z₁)ₙ₁₋ₘ₁ₓ₁ (6),
or
(R₁O)₃Si-R₂-Si(OR₁)₃ (7),
formulae (4), (5), (6) and (7) in which:
M₁ represents Al(III), Ce(IV), Si(IV), Zr(IV) or Ti(IV), the number between brackets being the valency of the M₁ atom;
n₁ represents the valency of the M₁ atom;
x₁ is an integer ranging from 1 to n₁-1;
Z₁ represents a halogen atom or -OR₁;
R₁ represents an alkyl group, preferably comprising 1 to 4 carbon atoms;
R₁' represents a non-hydrolysable group chosen from alkyl groups, especially C₁₋₄ alkyl groups, alkenyl groups, in particular C₂₋₄ alkenyl groups, alkynyl groups, in particular C₂₋₄ alkynyl groups, aryl groups, in particular C₆₋₁₀ aryl groups, methacryl or methacryloxy(C₁₋₁₀ alkyl) groups, epoxyalkyl or epoxyalkoxyalkyl groups in which the alkyl group is linear, branched or cyclic, and is a C₁₋₁₀ alkyl group, and the alkoxy group comprises from 1 to 10 carbon atoms;
L₁ is a monodentate or polydentate complexing ligand, preferably a polydentate complexing ligand;
m₁ represents the degree of hydroxylation of the ligand L₁; and
R₂ represents a divalent non-hydrolysable group chosen from alkylene groups, preferably C₁₋₄ alkylene groups, alkenylene groups, in particular C₂₋₄ alkenylene groups, alkynylene groups, in particular C₂₋₄ alkynylene groups, arylene groups, in particular C₆₋₁₀ arylene groups, methacryl and methacryloxy (C₁₋₁₀ alkyl) groups, epoxyalkyl or epoxyalkoxyalkyl groups in which the alkyl group is linear, branched or cyclic, and is a C₁₋₁₀ alkyl group, and the alkoxy group comprises from 1 to 10 carbon atoms.

6. Nanostructured material according to Claim 5, **characterized in that** R₁ represents a methyl or ethyl group; R₁' represents a non-hydrolysable group chosen from methyl, ethyl, propyl, butyl, vinyl, 1-propenyl, 2-propenyl, butenyl, acetylenyl, propargyl, phenyl, naphthyl, methacryl, methacryloxypropyl, glycidyl and glycidyloxy(C₁₋₁₀ alkyl) groups; and L₁ is a complexing ligand chosen from carboxylic acids, β-diketones, β-keto esters, α- and β-hydroxy acids, amino acids, phosphonic acid and phosphonates.

7. Nanostructured material according to any one of the preceding claims, comprising, in addition, a polymer or hybrid organic/inorganic matrix.

8. Nanostructured material according to Claim 7, **characterized in that** the matrix is a hybrid organic/inorganic matrix obtained by polycondensation or at least one metal alkoxide or metal halide in the presence of a solvent, and optionally a catalyst.

9. Nanostructured material according to Claim 8, **characterized in that** the metal alkoxide or metal halide has the general formula:
M'Z'_{n'} (8)
R"_{x'}M' Z'_{n'-x'} (9)
L'_{m'x'}M' Z'_{m'x'} (10)
Z'_{n'-1}M'-R"'-M Z'_{n'-1} (11)
in which:
n' represents the valency of the M' metal atom, preferably 3, 4 or 5;
x' is an integer ranging from 1 to n'-1;
M' represents a metal atom of valency III such as Al, of valency IV such as Si, Ce, Zr and Ti, or of valency V such as Nb;
Z' represents a hydrolysable group chosen from halogen atoms, alkoxy groups, preferably C₁₋₄ alkoxy groups, aryloxy groups, in particular C₆₋₁₀ aryloxy groups, acyloxy groups, in particular C₁₋₄ acyloxy groups, and C₁₋₁₀ alkylcarbonyl groups;
R" represents a monovalent non-hydrolysable group chosen from alkyl groups, preferably C₁₋₄ alkyl groups, alkenyl groups, in particular C₂₋₄ alkenyl groups, alkynyl groups, in particular C₂₋₄ alkynyl groups, aryl groups, in particular C₆₋₁₀ aryl groups, (meth)acryl or methacryloxy (C₁₋₁₀ alkyl) groups, and epoxyalkyl or epoxyalkoxyalkyl groups in which the alkyl group is linear, branched or cyclic, and is a C₁₋₁₀ alkyl group, and the alkoxy group comprises from 1 to 10 carbon atoms;
R"' represents a divalent non-hydrolysable group chosen from alkylene groups, preferably C₁₋₄ alkylene groups, alkenylene groups, in particular C₂₋₄ alkenylene groups, alkynylene groups, in particular C₂₋₄ alkynylene groups, arylene groups, in particular C₆₋₁₀ arylene groups, methacryl or methacryloxy(C₁₋₁₀ alkyl) groups, and epoxyalkyl or epoxyalkoxyalkyl groups in which the alkyl group is linear, branched or cyclic, and is a C₁₋₁₀ alkyl group, and the alkoxy group comprises from 1 to 10 carbon atoms; and
L' represents a preferably polydentate complexing ligand;
m' represents the degree of hydroxylation of the ligand L'.

10. Nanostructured material according to Claim 9, **characterized in that**:
n' is equal to 4;
x' is an integer ranging from 1 to 3;
M' represents a silicon, cerium or zirconium atom;
Z' represents a hydrolysable group chosen from Cl and Br, and methoxy, ethoxy, n-propoxy, i-propoxy, butoxy, phenoxy, acetoxy, propionyloxy and acetyl groups;
R" represents a monovalent non-hydrolysable group chosen from methyl, ethyl, propyl, butyl, vinyl, 1-propenyl, 2-propenyl, butenyl, acetylenyl, propargyl, phenyl, naphthyl, methacryl, methacryloxypropyl, glycidyl and glycidyloxy(C₁₋₁₀ alkyl) groups;
R"' represents a divalent non-hydrolysable group chosen from methylene, ethylene, propylene, butylene, vinylene, 1-propenylene, 2-propenylene, butenylene, acetylenylene, propargylene, phenylene, naphthylene, methacryl, methacryloxypropyl, glycidyl and glycidyloxy(C₁₋₁₀ alkyl) groups; and
L' represents a carboxylic acid, a β-diketone, a β-keto ester, an α- or β-hydroxy acid, an amino acid, phosphonic acid or a phosphonate.

11. Nanostructured material according to any one of the preceding claims, comprising, in addition, at least one functionalized nano-building block different from that defined in Claim 1, or non-functionalized nano-building block.

12. Method for preparing a nanostructured material according to any one of Claims 1 to 6, comprising the steps consisting in:
(a) preparing the nano-building blocks by a hydrolytic or non-hydrolytic process from at least one metal alkoxide or metal halide such as defined in Claims 5 and 6; and
(b) functionalizing the nano-building blocks by means of a functionalizing agent, such as defined in Claim 1.

13. Method for preparing a nanostructured material according to any one of Claims 7 to 10, comprising, on the one hand, the method according to Claim 12, and, on the other hand, the steps consisting in:
(c) preparing the hybrid organic/inorganic matrix by a sol-gel process, from at least one metal alkoxide such as defined in Claim 9 or 10, the preparation by a sol-gel process being carried out in the presence of a solvent, and optionally a catalyst;
then in
(d) mixing the functionalized nano-building blocks obtained in step b) and the matrix obtained in step c).

14. Preparation method according to Claim 12 or 13, **characterized in that** at least one additive is added during step a) or during step d) or during both steps a) and d).

15. Preparation method according to Claim 14, **characterized in that** an additive is added during step a) and that the final material from step d) is of the core/shell type, the core being formed from the additive and the shell being formed from a nano-building block.

16. Preparation method according to Claim 14 or 15, **characterized in that** the additive is chosen from surfactants in order to improve the wettability of the sol on to the metallic substrate, colorants, crosslinking agents, coupling agents, corrosion inhibitors and mixtures thereof.

17. Use of the nanostructured material according to any one of Claims 1 to 11, in aeronautics and the aerospace industry, as a protective coating for metallic surfaces.

18. Article **characterized in that** it comprises a metallic substrate and at least one coating composed of at least one nanostructured material according to any one of Claims 1 to 11.

19. Article according to Claim 18, **characterized in that** the metallic substrate is made of titanium, aluminium or one of their alloys.

20. Method for preparing an article according to Claim 18 or 19, **characterized in that** it comprises a step of dipping in a bath, depositing on to the substrate by spin, spray or laminar-flow coating or depositing using a brush, at least one nanostructured material according to any one of Claims 1 to 11.
